(19) Europäisches Patentamt / European Patent Office / Office européen des brevets

(11) **EP 2 470 941 B1**

(12) **FASCICULE DE BREVET EUROPEEN**

(45) Date de publication et mention de la délivrance du brevet:
**08.01.2014   Bulletin 2014/02**

(21) Numéro de dépôt: **10768576.0**

(22) Date de dépôt: **29.09.2010**

(51) Int Cl.:
**G02C 7/06** (2006.01)   **G02C 7/02** (2006.01)

(86) Numéro de dépôt international:
**PCT/IB2010/054392**

(87) Numéro de publication internationale:
**WO 2011/039712 (07.04.2011 Gazette 2011/14)**

(54) **PROCEDE DE DETERMINATION, D'OPTIMISATION ET DE FABRICATION D'UNE LENTILLE OPHTALMIQUE ET ENSEMBLE DE LENTILLES OPHTALMIQUES**

VERFAHREN ZUR BESTIMMUNG, OPTIMIERUNG UND HERSTELLUNG EINER OPHTHALMISCHEN LINSE UND SATZ AUS OPHTHALMISCHEN LINSEN

METHOD FOR DETERMINING, OPTIMISING AND PRODUCING AN OPHTHALMIC LENS AND SET OF OPHTHALMIC LENSES

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité:  **01.10.2009   FR 0904681**

(43) Date de publication de la demande:
**04.07.2012   Bulletin 2012/27**

(73) Titulaire: **Essilor International (Compagnie Générale d'Optique) 94220 Charenton-le-Pont (FR)**

(72) Inventeurs:
• **GUILLOUX, Cyril F-94220 Charenton-le-Pont (FR)**
• **MOUSSET, Soazic F-94220 Charenton-le-Pont (FR)**
• **POULAIN, Isabelle F-94220 Charenton-le-Pont (FR)**

(74) Mandataire: **Hirsch & Associés 58, avenue Marceau 75008 Paris (FR)**

(56) Documents cités:
**EP-A1- 0 990 939     EP-A1- 1 087 252
EP-A1- 1 747 750     US-A1- 2008 094 571**

• **Anonymous: "Ihre Brille auf Sie angepasst", , [Online] 14 février 2008 (2008-02-14), XP002580072, Carl Zeiss: Leseabstand Extrait de l'Internet: URL:http://www.zeiss.de/ netfraldemo_brille nanpassung> [extrait le 2010-04-28]**

**Description**

La présente invention concerne un procédé de détermination d'une lentille ophtalmique, un procédé d'optimisation et un procédé de fabrication de lentilles ophtalmiques ainsi qu'un ensemble de lentilles ophtalmiques.

Toute lentille ophtalmique, destinée à être portée dans une monture, est associée à une prescription. La prescription en matière ophtalmique peut comprendre une prescription de puissance, positive ou négative, ainsi qu'une prescription d'astigmatisme. Ces prescriptions correspondent à des corrections à apporter au porteur des lentilles pour corriger les défauts de sa vision. Une lentille est montée dans la monture en fonction de la prescription et de la position des yeux du porteur par rapport à la monture.

Pour les porteurs presbytes, la valeur de la correction de puissance est différente en vision de loin et en vision de près, du fait des difficultés d'accommodation en vision de près. La prescription est alors composée d'une valeur de puissance en vision de loin et d'une addition (ou progression de puissance) représentative de l'incrément de puissance entre la vision de loin et la vision de près. Ceci revient à une prescription de puissance en vision de loin et à une prescription de puissance en vision de près. Les lentilles adaptées aux porteurs presbytes sont des lentilles multifocales progressives. Ces lentilles sont décrites par exemples dans FR-A-2 699 294, US-A-5 270 745, US-A-5 272 495, FR-A-2 683 642, FR-A-2 699 294 ou encore FR-A-2 704 327.

Les lentilles ophtalmiques multifocales progressives comprennent ainsi une zone de vision de loin, une zone de vision de près, une zone de vision intermédiaire, ainsi qu'une méridienne principale de progression traversant ces trois zones. Elles sont généralement déterminées par optimisation, à partir d'un certain nombre de contraintes imposées aux différentes caractéristiques de la lentille. On définit des familles de lentilles multifocales progressives, chaque lentille d'une famille étant caractérisée par une addition, qui correspond à la variation de puissance entre la zone de vision de loin et la zone de vision de près. Plus précisément, l'addition, notée Add, correspond à la variation de puissance entre un point VL de la zone de vision de loin et un point VP de la zone de vision de près, qui sont appelés respectivement point de contrôle de la vision de loin et point de contrôle de la vision de près. Les points VP et VL peuvent notamment correspondre aux points de la lentille où la puissance correspond à la prescription en vision de près et en vision de loin, respectivement. Cependant, d'autres définitions de ces points de contrôle sont également possibles. La définition de ces points de contrôle peut notamment varier en fonction des fabricants de lentilles ophtalmiques.

Une lentille présente aussi classiquement une croix de montage CM. Il s'agit d'un point de la lentille qui est utilisé par l'opticien pour le montage de la lentille dans la monture.

En particulier, l'opticien à partir des caractéristiques anthropométriques du porteur - écarts et hauteurs pupillaires par rapport à la monture - procède à l'usinage de la lentille par débordage, en utilisant comme repère la croix de montage. Elle correspond pour une lentille correctement positionnée dans une monture à une direction horizontale du regard. En d'autres termes, pour une lentille correctement positionnée dans une monture, la croix de montage correspond au point d'intersection de la face avant de la lentille, opposée au porteur, avec la direction primaire du regard du porteur.

On peut aussi définir pour une lentille ophtalmique progressive, un décalage latéral en direction nasal entre le point VP de la zone de vision de près et le point VL de la zone de vision de loin. Ce décalage latéral en direction nasal est connu sous le nom anglais d'« inset ». Il est également possible de définir l'inset comme étant le décalage latéral entre la croix de montage de la lentille ophtalmique et le point de contrôle de la vision de près VP. Cette définition de l'inset ne change généralement pas la valeur de l'inset. En effet, le point de contrôle de vision de loin VL est communément aligné verticalement avec la croix de montage.

Les lentilles multifocales progressives comportent habituellement une face asphérique complexe, qui peut être la face avant opposée au porteur des lunettes, et une face sphérique ou torique, qui peut être la face arrière dirigée vers le porteur des lunettes. Cette face sphérique ou torique permet d'adapter la lentille à l'amétropie du porteur, de sorte qu'une lentille multifocale progressive n'est généralement définie que par sa surface asphérique complexe. Comme il est bien connu, une surface asphérique est généralement définie par l'altitude de tous ses points. On utilise aussi les paramètres constitués par les courbures minimales et maximales en chaque point, ou plus couramment leur demi-somme et leur différence. Cette demi-somme et la valeur absolue de cette différence multipliées par un facteur n-1, n étant l'indice de réfraction du matériau de la lentille, sont appelées sphère moyenne et cylindre.

Une lentille multifocale progressive peut ainsi être définie, en tout point de sa surface complexe, par des caractéristiques surfaciques comprenant une valeur de sphère moyenne et une valeur de cylindre. La surface complexe de la lentille peut être située sur la face avant ou sur la face arrière ou répartie entre les deux faces, selon les techniques d'usinage utilisées.

Par ailleurs, une lentille multifocale progressive peut aussi être définie par des caractéristiques optiques prenant en considération la situation du porteur des lentilles. En effet, les lois de l'optique des tracés de rayons entraînent l'apparition de défauts optiques quand les rayons s'écartent de l'axe central de toute lentille. On s'intéresse classiquement aux aberrations dites défauts de puissance et d'astigmatisme. Ces aberrations optiques peuvent être appelées de façon générique défauts d'obliquité des rayons. Les défauts d'obliquité des rayons ont déjà été bien identifiés dans l'art antérieur et des améliorations ont été proposées.

Par exemple, le document WO-A-98 12590 décrit une méthode de détermination par optimisation d'un jeu de lentilles ophtalmiques multifocales progressives. Ce document propose de définir le jeu de lentilles en considérant les caractéristiques optiques des lentilles et notamment la puissance porteur et l'astigmatisme oblique, dans les conditions du porté. La lentille est optimisée par tracé de rayons, à partir d'un ergorama associant à chaque direction du regard dans les conditions du porté un point objet visé.

Par ailleurs, il est proposé, en particulier par les sociétés ZEISS et RODENSTOCK sous les références respectives Zeiss Individual et Impression ILT, de tenir compte, pour la définition de lentilles progressives, de la position réelle de la lentille devant l'oeil du porteur. A cette fin, on procède à des mesures de la position de la lentille dans la monture choisie par le porteur.

La demanderesse commercialise également, sous la marque VARILUX IPSEO une gamme de verres progressifs, qui sont définis en fonction du comportement oeil-tête du porteur. Cette définition repose sur le constat que tout porteur, pour regarder différents points à une hauteur donnée dans l'espace objet, peut déplacer soit la tête, soit les yeux et que la stratégie de vision d'un porteur repose sur une combinaison des mouvements de la tête et des yeux. Le produit VARILUX IPSEO propose donc des lentilles différentes, pour un même couple amétropie-addition, en fonction de la stratégie de vision latérale du porteur.

Dans le même ordre d'idée de personnaliser les lentilles ophtalmiques progressives aux besoins spécifiques de chaque porteur, la demande de brevet français déposée par la demanderesse sous le titre Procédé de détermination d'une paire de lentilles ophtalmiques progressives le 27 Août 2004 sous le numéro 04 09 144 propose de tenir compte du décalage du plan sagittal du porteur en vision de près pour la détermination des caractéristiques optiques des lentilles progressives.

La société RUPP & HUBRACH a par ailleurs proposé, sous la référence Ysis, de mesurer l'inclinaison de la tête pendant une tâche de vision de prés pour déterminer le choix entre quatre longueurs de progression proposées.

Enfin, il est proposé, dans la demande internationale PCT/FR2009/000458 déposée 17 avril 2009, de déterminer une lentille par optimisation en tenant compte de la position individuelle du centre de rotation de l'oeil du porteur.

On a donc cherché, ces dernières années, à personnaliser les lentilles ophtalmiques progressives afin de répondre au mieux aux besoins de chaque porteur.

Il existe cependant toujours un besoin d'une lentille qui satisfasse mieux les besoins spécifiques de chaque porteur. En particulier, il est toujours recherché d'améliorer le confort et de faciliter l'adaptation du porteur aux lentilles ophtalmiques, notamment aux lentilles ophtalmiques progressives.

L'invention propose en conséquence de prendre en compte la taille du porteur ou la hauteur des yeux du porteur afin de concevoir des lentilles ophtalmiques personnalisées aux besoins du porteur. Le porteur aura ainsi un meilleur confort visuel.

Les documents US 2008/0094571 et EP 1747750 décrivent des méthodes prenant en compte la taille du porteur pour l'optimisation de verres ophtalmiques.

La présente invention propose ainsi le procédé de détermination d'une lentille ophtalmique de la revendication 1.

Suivant des modes de réalisation préférés, le procédé selon l'invention comprend une ou plusieurs des caractéristiques suivantes :

- l'étape ii) comprend les étapes de :

   a) détermination d'une distance de lecture du porteur en fonction de la taille ou de la hauteur des yeux du porteur, et
   b) calcul d'au moins une caractéristique de la lentille ophtalmique en fonction de la distance de lecture ;

- on détermine le décalage latéral en direction nasale d'un point de contrôle d'une zone de vision de près par rapport à un point de contrôle d'une zone de vision de loin selon une fonction décroissante de la taille ou de la hauteur des yeux du porteur ;
- on détermine le décalage latéral en direction nasale du point de contrôle de la zone de vision de près par rapport au point de contrôle de la zone de vision de loin selon une fonction croissante de l'addition de la lentille ophtalmique ;
- on détermine l'addition de la lentille ophtalmique selon une fonction décroissante de la taille ou de la hauteur des yeux du porteur ;
- on détermine également l'addition de la lentille ophtalmique selon une fonction croissante de l'âge du porteur ; et
- la hauteur du centre des aberrations de la lentille ophtalmique est positionnée sur la lentille ophtalmique en fonction de la taille ou de la hauteur des yeux du porteur.

Selon un autre aspect, l'invention se rapporte à un Procédé d'optimisation d'une lentille ophtalmique destinée à un porteur de prescription connue comprenant les étapes de :

- choix d'au moins une surface courante de la lentille ophtalmique ;
- détermination d'une fonction optique cible de lentille ophtalmique fonction de la prescription du porteur, par mise en oeuvre d'un procédé de détermination tel que décrit ci-avant dans toute ses combinaisons ;
- détermination de cibles optiques à partir de la fonction optique cible ; et
- détermination d'au moins une surface optimisée par modulation de la au moins une surface courante pour atteindre les cibles optiques.

L'invention vise également un procédé de fabrication d'une lentille ophtalmique comprenant les étapes de :

- fourniture d'une lentille ophtalmique initiale ;
- détermination d'au moins une surface optimisée pour la lentille ophtalmique au moyen du procédé d'optimisation tel que décrit ci-avant ; et
- usinage de la lentille pour réaliser la au moins une surface optimisée.

Enfin, l'invention se rapporte également, selon un autre aspect, à un ensemble de lentilles semi-finies destinées à des porteurs de tailles ou de hauteurs d'yeux différentes comprenant des lentilles dont au moins une caractéristique est fonction de la taille ou de la hauteur des yeux des porteurs.

D'autres caractéristiques et avantages de l'invention apparaîtront à la lecture de la description qui suit d'un mode de réalisation préféré de l'invention, donnée à titre d'exemple et en référence au dessin annexé.

La figure 1 représente schématiquement trois porteurs de lentilles ophtalmiques fixant un même point de référence.
La figure 2 représente l'évolution de la progression de puissance d'une lentille ophtalmique définie selon un exemple de procédé de définition de lentille pour trois porteurs de tailles distinctes.
La figure 3 représente les résultats d'une étude anthropométrique de détermination de la distance de Harmon en fonction de la taille d'individus.
La figure 4 représente la variation de l'inset de lentilles ophtalmiques définies selon un exemple de procédé de définition de lentille.
La figure 5 représente trois lois reliant la distance de vision de près en fonction de la taille des porteurs et de l'addition des lentilles prescrites aux porteurs.
La figure 6 représente schématiquement les courbes d'iso-puissance d'une lentille du type unifocale connue.
La figure 7 représente schématiquement les courbes d'iso-puissance d'une lentille du type unifocale définie selon un exemple de procédé de définition.

Selon l'invention, un procédé de détermination d'une lentille ophtalmique pour un porteur comprend les étapes de :

i) détermination de la taille du porteur ou de la hauteur des yeux du porteur ;
ii) calcul d'au moins une caractéristique de la lentille ophtalmique en fonction de la taille du porteur ou de la hauteur des yeux du porteur.

La caractéristique de la lentille ophtalmique en fonction de la taille du porteur ou de la hauteur des yeux du porteur est le démarrage de la progression de puissance de la lentille, c'est-à-dire le point de la méridienne de progression correspondant à l'abaissement des yeux du porteur depuis la croix de montage, pour atteindre un seuil prédéterminé, par exemple compris entre 5 et 25%, de l'addition de la lentille ophtalmique.

Il convient tout d'abord de remarquer que la taille d'un porteur ou la hauteur de ses yeux sont des grandeurs facilement mesurables. Le porteur connaît généralement sa taille si bien qu'il peut même être envisagé de ne pas procéder à la mesure de la taille du porteur.

Or, la taille du porteur, ou la hauteur de ses yeux, conditionne par exemple sa façon d'aborder l'espace objet, notamment la position et les angles des yeux et de la tête du porteur pour fixer des points.

Ainsi, la prise en compte de la taille du porteur ou de la hauteur de ses yeux pour calculer au moins un paramètre de la lentille ophtalmique permet d'adapter au mieux la lentille au porteur par optimisation. En outre, la mesure, éventuelle, de la taille du porteur ou de la hauteur de ses yeux rend cette optimisation particulièrement aisée à mettre en oeuvre.

Par ailleurs, la taille du porteur et la hauteur des yeux du porteur sont des variables qui dépendent fortement l'une de l'autre. En particulier, la hauteur des yeux du porteur peut être estimée en fonction de la taille du porteur. Pour ce faire, on peut estimer que la distance entre les yeux et le haut du crâne du porteur est sensiblement la même pour tous les porteurs, ou encore estimer que cette distance est une fonction, notamment linéaire ou affine, de la taille du porteur. Bien évidemment, il est également possible, de manière réciproque, de déterminer la taille du porteur en fonction de la hauteur des yeux du porteur.

Ainsi, en fonction de l'adaptation souhaitée de la lentille ophtalmique, il est possible de prendre en compte la taille du porteur ou la hauteur des yeux du porteur de manière analogue, étant donné que l'une de ces variables peut être estimée en fonction de l'autre.

En pratique, il apparaît plus aisé de mesurer la taille du porteur. Il est même possible de demander simplement sa taille au porteur. Il est alors possible d'estimer la hauteur des yeux du porteur comme indiqué ci-dessus.

Il est également possible de mesurer directement la hauteur des yeux du porteur et, si nécessaire, de déduire de cette mesure, la taille du porteur.

L'information de la taille ou de la hauteur des yeux du porteur est transmise par l'opticien ou l'optométriste au fabricant de la lentille ophtalmique.

Cette information de la taille ou de la hauteur des yeux peut être une valeur mesurée ou estimée comme cela a été indiqué ci-dessus. Ceci permet une optimisation optimale de la lentille.

Cependant, il peut également être uniquement indiqué que la taille ou la hauteur des yeux du porteur est comprise dans un intervalle prédéfini. Ceci permet notamment d'optimiser les lentilles ophtalmiques d'un porteur qui ne connaîtrait pas sa taille et/ou la hauteur de ses yeux. De plus, il est ainsi possible de définir des lentilles ophtalmiques semi-finies optimisées pour l'intervalle prédéfini. On peut alors définir un ensemble de lentilles ophtalmiques semi-finies optimisées chacune sur un intervalle prédéfini.

Le procédé selon l'invention s'applique aux lentilles multifocales progressives.

Selon un premier point, ce procédé de détermination s'applique à une lentille ophtalmique multifocale, en particulier à une lentille multifocale progressive telle que définie ci-avant.

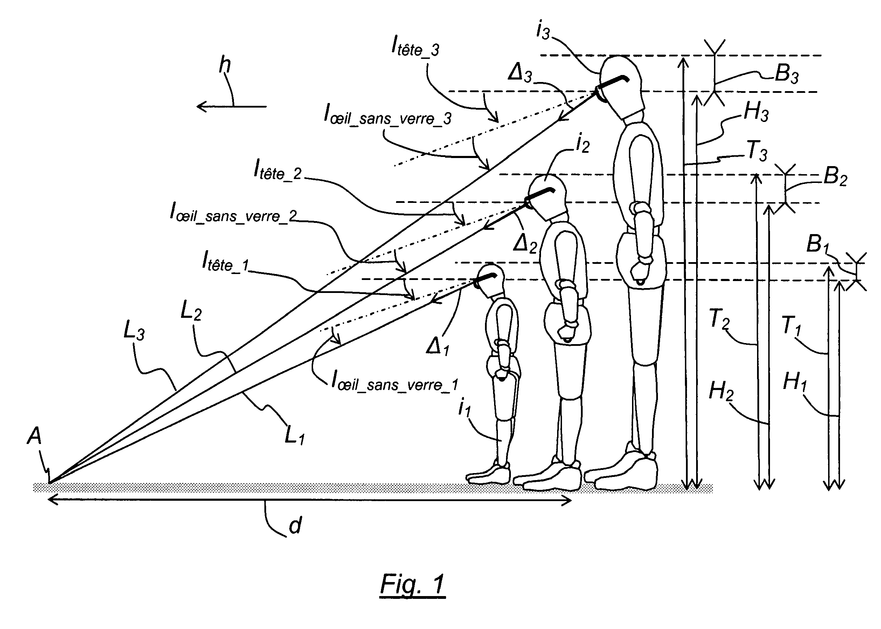

La figure 1 représente schématiquement trois porteurs $i_1$, $i_2$, $i_3$ porteurs de lunettes à lentilles ophtalmiques multifocales, les trois porteurs étant de tailles respectives $T_1$, $T_2$, $T_3$ distinctes.

Dans la suite, on note sans indice une grandeur physique, de manière générale, et avec indice la même grandeur physique relative à chacun des porteurs particuliers $i_1$, $i_2$, $i_3$. Une équation donnée ci-après avec des grandeurs physiques sans indices doit être comprise comme s'appliquant aux trois porteurs $i_1$, $i_2$, $i_3$, considérés à titre d'exemple.

Pour chaque porteur $i_1$, $i_2$, $i_3$, on définit la hauteur des yeux H, notée respectivement $H_1$, $H_2$, $H_3$, par la formule :

$$H = T - B, \qquad\qquad (1)$$

dans laquelle B représente, pour chaque porteur, la distance entre les yeux et le sommet du crâne. La distance B peut donc être distincte entre les porteurs et est notée $B_1$, $B_2$, $B_3$, respectivement.

La figure 1 illustre schématiquement la différence d'inclinaison de la tête $I_{tête}$, notée respectivement $I_{tête\_1}$, $I_{tête\_2}$, $I_{tête\_3}$, et des yeux $I_{oeil}$, notée respectivement $I_{oeil\_1}$, $I_{oeil\_2}$, $I_{oeil\_3}$, des trois porteurs $i_1$, $i_2$, $i_3$ pour fixer du regard un même point A de référence. L'angle $I_{oeil}$ correspond à l'angle d'abaissement de l'oeil du porteur.

En l'espèce, le point A de référence est situé au niveau du sol, à une distance d des porteurs $i_1$, $i_2$, $i_3$. Bien que différente sur la figure 1, pour des raisons de lisibilité de cette figure, la distance d est en fait identique pour tous les porteurs $i_1$, $i_2$, $i_3$.

Le point A de référence est ainsi situé à une distance L, notée respectivement $L_1$, $L_2$, $L_3$, des yeux des porteurs $i_1$, $i_2$, $i_3$, distinctes d'un porteur à l'autre. En effet, la distance L vérifie l'équation suivante :

$$L = \sqrt{d^2 + H^2} \qquad\qquad (2)$$

Chacun des porteurs $i_1$, $i_2$, $i_3$, fixe le point A de référence sous un angle, mesuré par rapport à l'horizontale h, égal à $I_{tête} + I_{oeil}$. L'angle $I_{tête} + I_{oeil}$ correspond ainsi à l'angle formé par la direction de regard $\Delta_1$, $\Delta_2$, $\Delta_3$, du porteur $i_1$, $i_2$, $i_3$ fixant le point A de référence, par rapport à la direction horizontale h, qui correspond à un regard à l'infini du porteur $i_1$, $i_2$, $i_3$.

Pour la suite, on considère que les trois porteurs ont un même comportement oeil-tête vertical.

Le comportement oeil-tête vertical est la propension d'un porteur à bouger, verticalement, plus la tête ou les yeux pour fixer un point cible. Ce comportement est classiquement mesuré par un gain C. Ce gain C est défini comme le rapport entre la déviation angulaire de la tête $I_{tête}$ par rapport à la déviation angulaire totale nécessaire pour fixer le point cible. La déviation angulaire totale nécessaire pour fixer le point cible correspond à la somme de la déviation angulaire de la tête $I_{tête}$ et de la déviation angulaire des yeux $I_{oeil}$ du porteur pour fixer le point cible.

En d'autres termes, le gain C est défini par la formule :

$$C = \frac{I_{tête}}{I_{tête} + I_{œil}} \qquad\qquad (3)$$

Bien entendu d'autres définitions du gain et du comportement oeil-tête sont envisageables.

Dans un premier temps, on ne tient pas compte des effets prismatiques induits par les lentilles ophtalmiques portées par les porteurs $i_1$, $i_2$, $i_3$. En d'autres termes, on suppose que le rayon lumineux issu du point A et vu par le porteur a un trajet rectiligne.

Dans ce cas, on déduit des formules précédentes que la valeur de l'abaissement des yeux $I_{oeil}$, que l'on note $I_{oeil\_sans\_verre}$, est donnée, pour chaque porteur $i_1$, $i_2$, $i_3$, par l'équation :

$$I_{œil\_sans\_verre} = (1 - C) \times \text{Arctan}\left(\frac{(T - B)}{d}\right) \qquad\qquad (4)$$

Parallèlement, pour chaque porteur, on définit la proximité P du point A de référence comme étant l'inverse de la distance L :

$$P = \frac{1}{L} \qquad\qquad (5)$$

On suppose ici que l'accommodation subjective restante est nulle. L'accommodation subjective est composée d'une part de l'accommodation objective restante, qui correspond à la capacité d'accommodation du cristallin et, d'autre part, de la profondeur de champ.

Par conséquent, la proximité P est égale à la puissance $P_{verre}$ à ajouter à la puissance en vision de loin pour que le porteur $i_1$, $i_2$, $i_3$ voit le point A nettement. D'où :

$$P_{verre} = \frac{1}{\sqrt{d^2 + (T - B)^2}} \qquad\qquad (6)$$

Le tableau I ci-dessous regroupe des exemples de valeurs de l'abaissement des yeux $I_{oeil-sans\_verre}$ pour trois porteurs, valeurs calculées selon cette formule (4), et de la puissance du verre correspondante, calculée selon la formule (6).

Dans ce tableau I, les porteurs sont de tailles $T_1$, $T_2$, $T_3$ égales à 1,50 m, 1,67 m et 2 m, respectivement. Pour simplifier les calculs, il est supposé dans ce tableau que les valeurs $B_1$, $B_2$, $B_3$ sont identiques pour tous les porteurs $i_1$, $i_2$, $i_3$. On choisit $B_1 = B_2 = B_3 = 13$ cm.

La distance d entre les porteurs $i_1$, $i_2$, $i_3$, et le point A de référence est choisie égale à 1,25 m. Le point A, sur le sol, correspond ainsi au point fixé par un porteur lors de la marche.

Par ailleurs, pour les calculs, le gain C est choisi égal à 0,67. Cette valeur du gain C correspond à un comportement du porteur, selon lequel il bouge environ deux fois plus la tête que les yeux pour fixer un point cible. En d'autres termes, un gain C égal à 0,67 correspond à un angle $I_{tête}$ à peu près deux fois plus grand que l'angle $I_{oeil}$.

Enfin, pour ce premier calcul, on considère une lentille qui a une sphère nulle et une addition de 2,50 dioptries.

Comme l'indique le tableau I, plus le porteur est grand, plus il doit incliner les yeux, par rapport à la direction horizontale, pour fixer un même point A de référence. Plus précisément, dans les conditions énoncées ci-dessus, un porteur de 2,00 m baisse les yeux d'un angle de 17,43° par rapport à l'horizontale pour fixer le point A de référence. Un porteur d'1,50 m baisse lui les yeux de 14,8°, soit d'environ 2,5° de moins que le porteur de 2,00 m.

Tableau I : Inclinaison de l'oeil du porteur en fonction de sa taille

| porteur | T (m) | H (m) | L (m) | P (dioptrie) | Sphère (dioptrie) | Addition (dioptrie) | $P_{verre}$ (dioptrie) | $I_{oeil\_sans\_verre}$ (degré) |
|---------|-------|-------|-------|--------------|-------------------|---------------------|------------------------|--------------------------------|
| $i_1$ | 1,50 | 1,37 | 1,85 | 0,54 | 0,00 | 2,50 | 0,54 | 14,8 |
| $i_2$ | 1,67 | 1,54 | 1,98 | 0,50 | 0,00 | 2,50 | 0,50 | 16,0 |

(suite)

| porteur | T (m) | H (m) | L (m) | P (dioptrie) | Sphère (dioptrie) | Addition (dioptrie) | $P_{verre}$ (dioptrie) | $I_{oeil\_sans\_verre}$ (degré) |
|---|---|---|---|---|---|---|---|---|
| $i_3$ | 2,00 | 1,87 | 2,25 | 0,44 | 0,00 | 2,50 | 0,44 | 17,4 |

Ce premier calcul est cependant théorique ou tout du moins correspond en fait à des porteurs sans lunettes. En effet, comme indiqué ci-avant, dans ce premier calcul, les effets prismatiques des lentilles ophtalmiques n'ont pas été pris en compte.

Or, toute lentille ophtalmique induit des effets prismatiques, qui dépendent notamment de la puissance de la lentille ophtalmique et du matériau dont elle est composée.

Dans le cas où l'on prend en compte les effets prismatiques, le faisceau lumineux reliant A à l'oeil du porteur subit une réfraction par lentille. Ainsi, le point d'impact du faisceau lumineux, issu du point A, sur la lentille est différent du point d'intersection de la droite reliant l'oeil au point A. L'abaissement de l'oeil est également différent dans le cas où l'on prend en compte les effets prismatiques induits par la lentille, du fait de la réfraction subie par le faisceau lumineux issu du point A.

Dans le cas où l'on tient compte des effets prismatiques de la lentille ophtalmique, on note l'angle d'abaissement de l'oeil $I_{oeil\_avec\_verre}$.

Le faisceau lumineux fait donc un angle légèrement différent de $I_{tête}+I_{oeil\_sans\_verre}$ avec l'horizontale.

Les tableaux II, III et IV ci-dessous regroupent les valeurs de l'angle $I_{oeil\_avec\_verre}$ pour chacun des trois porteurs $i_1$, $i_2$, $i_3$ correspondant aux valeurs de l'angle $I_{oeil\_sans\_verre}$ du tableau II et pour trois formes différentes de la lentille ophtalmique. Dans le cas du tableau II, la lentille a une sphère nulle. Le tableau III correspond à une lentille de prescription égale à - 6 dioptries et le tableau IV à une lentille de prescription égale à 6 dioptries. L'angle $I_{oeil\_avec\_verre}$ peut-être déterminé par tracé de rayons.

Tableau II : Inclinaison de l'oeil du porteur en fonction de sa taille dans le cas d'une lentille à sphère nulle

| porteur | P (dioptrie) | Sphère (dioptrie) | Add. (dioptrie) | $P_{verre}$ (dioptrie) | $I_{oeil\_sans\_verre}$ (degré) | $I_{oeil\_avec\_verre}$ (degré) |
|---|---|---|---|---|---|---|
| $i_1$ | 0,54 | 0,00 | 2,50 | 0,54 | 14,8 | 10,1 |
| $i_2$ | 0,50 | 0,00 | 2,50 | 0,50 | 16,0 | 11,6 |
| $i_3$ | 0,44 | 0,00 | 2,50 | 0,44 | 17,4 | 14,4 |

Tableau III : Inclinaison de l'oeil du porteur en fonction de sa taille dans le cas d'une lentille de prescription égale à -6 dioptries au point de vision de loin

| porteur | P (dioptrie) | Sphère (dioptrie) | Addition (dioptrie) | $P_{verre}$ (dioptrie) | $I_{oeil\_sans\_verre}$ (degré) | $I_{oeil\_avec\_verre}$ (degré) |
|---|---|---|---|---|---|---|
| $i_1$ | 0,54 | -6,00 | 2,50 | 0,54 | 14,8 | 8,7 |
| $i_2$ | 0,50 | -6,00 | 2,50 | 0,50 | 16,0 | 9,9 |
| $i_3$ | 0,44 | -6,00 | 2,50 | 0,44 | 17,4 | 12,2 |

Tableau IV : Inclinaison de l'oeil du porteur en fonction de sa taille dans le cas d'une lentille de prescription égale à +6 dioptries au point de vision de loin

| porteur | P (dioptrie) | Sphère (dioptrie) | Addition (dioptrie) | $P_{verre}$ (dioptrie) | $I_{oeil\_sans\_verre}$ (degré) | $I_{oeil\_avec\_verre}$ (degré) |
|---|---|---|---|---|---|---|
| $i_1$ | 0,54 | 6,00 | 2,50 | 0,54 | 14,8 | 14,1 |
| $i_2$ | 0,50 | 6,00 | 2,50 | 0,50 | 16,0 | 16,1 |
| $i_3$ | 0,44 | 6,00 | 2,50 | 0,44 | 17,4 | 20,4 |

Les tableaux II, III et IV montrent que, quelque soit la forme de la lentille ophtalmique, c'est-à-dire quelque soit la valeur de sphère de celle-ci, l'angle $I_{oeil\_avec\_verre}$ est d'autant plus grand que le porteur est grand. En d'autres termes, pour fixer un point sur le sol qui est à la même distance d du porteur, distance mesurée horizontalement sur la figure 1, un porteur abaisse les yeux d'autant plus qu'il est grand. En outre, la puissance du verre nécessaire pour regarder le point en question varie également en fonction de la hauteur des yeux du porteur.

Réciproquement, ces résultats peuvent également être interprétés comme suit : plus un porteur est grand et plus un point, fixé du regard par le porteur, situé à une distance prédéterminée du porteur, correspond à une intersection basse du regard du porteur avec la lentille ophtalmique.

Jusqu'à présent ces constatations n'étaient pas prises en compte dans la définition des lentilles ophtalmiques. Il en résulte un certain inconfort pour le porteur. En effet, le porteur est contraint de modifier son comportement oeil-tête vertical pour fixer un point du regard de telle sorte que l'intersection du regard avec la surface de la lentille corresponde à un point de la lentille ophtalmique de puissance appropriée.

Par conséquent, selon le procédé de définition de lentilles ophtalmiques, on adapte les lentilles ophtalmiques à la taille ou à la hauteur des yeux du porteur de telle sorte que la progression de puissance de la lentille ophtalmique progressive commence d'autant plus bas sur la lentille, par rapport à la croix de montage, que le porteur est grand, respectivement que la hauteur de ses yeux est grande.

En d'autres termes, plus le porteur est grand et plus la progression de puissance de sa lentille ophtalmique démarre bas par rapport à la croix de montage.

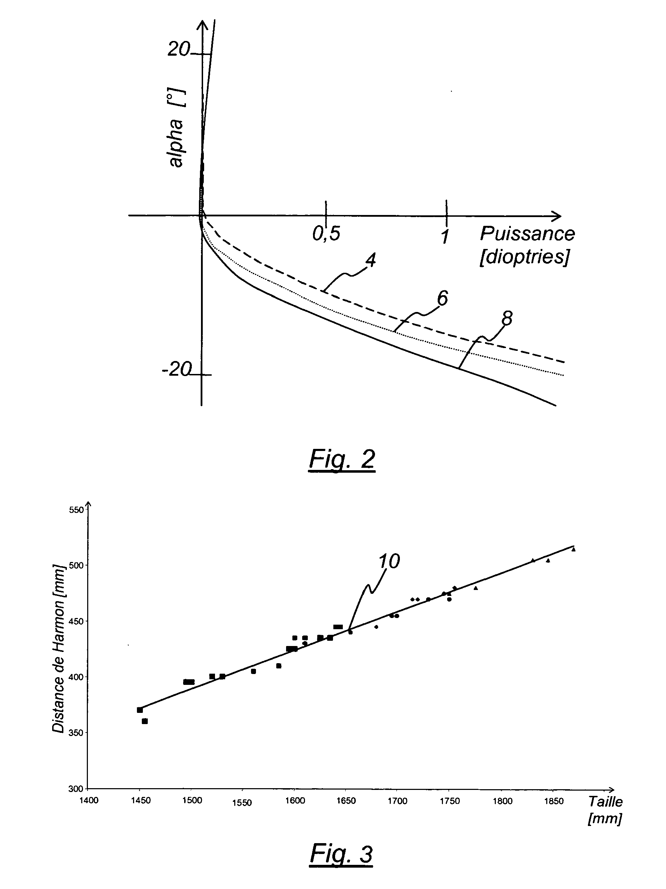

La figure 2 représente des exemples d'évolutions de la puissance de lentilles ophtalmiques adaptées aux trois porteurs $i_1$, $i_2$, $i_3$, le long de la méridienne de progression. Plus précisément, la position d'un point sur la lentille ophtalmique, le long de la méridienne, est représentée ici par l'angle alpha formé par la direction du regard du porteur passant par ce point sur la lentille, par rapport à une direction de référence du regard passant par la croix de montage de la lentille.

Les courbes 4, 6, 8 correspondent respectivement aux porteurs $i_1$, $i_2$, $i_3$. Conformément à ce qui a été décrit ci-avant, la courbe 4, du porteur $i_1$ de taille 1,50 m, se situe au-dessus de la courbe 6 relative au porteur $i_2$ d'1,67 m, qui elle-même se situe au-dessus de la courbe 8 relative au porteur $i_3$ de 2,00 m.

Comme expliqué ci-avant, on permet ainsi à l'utilisateur de ne pas avoir à modifier son comportement oeil-tête comme cela serait nécessaire si la lentille ophtalmique n'était pas définie en prenant en compte la taille ou la hauteur des yeux du porteur.

Selon un autre exemple de procédé de définition de lentilles ophtalmiques, il est proposé de déterminer en plus le décalage latéral en direction nasale d'un point de contrôle d'une zone de vision de près par rapport à un point de contrôle d'une zone de vision de loin selon une fonction décroissante de la taille ou de la hauteur des yeux du porteur.

Ce décalage latéral en direction nasal est connu sous le nom anglais d'« inset ».

Il est connu que la distance dite de Harmon correspond à la distance de travail de moindre dépense d'énergie en vision de près. En d'autres termes, c'est en travaillant à cette distance que le système visuel fournit le moins d'efforts. La distance de Harmon est donc considérée comme la distance de travail en vision de près la plus confortable. Il est donc intéressant de considérer la distance de Harmon comme distance de lecture pour la définition des lentilles ophtalmiques.

La distance de lecture est classiquement utilisée dans la définition d'une lentille ophtalmique pour déterminer la valeur de l'addition nécessaire à la lentille ophtalmique. En effet, pour mesurer l'addition, on place un objet à la distance de lecture du porteur et on détermine l'addition de la lentille ophtalmique qui est nécessaire pour que le porteur puisse voir nettement l'objet.

La distance de Harmon est définie comme étant la distance qui sépare la pointe du coude et l'extrémité supérieure de la première phalange du majeur. Cette distance de Harmon se mesure le plus souvent entre l'extrémité du coude et la pince formée par le pouce et l'index.

La figure 3 représente les résultats d'une première étude anthropométrique de détermination de la distance de Harmon, indiquée en ordonnées, en fonction de la taille d'individus, indiquée en abscisse. La distance de Harmon et la taille des individus sont données en millimètres sur cette figure 3. Il est à noter que de manière générale, les données anthropométriques dépendent de la date de l'étude, de l'origine ethnique de l'échantillon d'individus et de l'âge des individus.

Comme l'indique la droite 10 représentée sur la figure 3, il existe un lien statistique entre la taille des individus et la distance de Harmon de ces individus. Cette droite 10 est obtenue par régression linéaire.

D'autres travaux anthropométriques ont mené à estimer l'équation de la droite reliant la distance de Harmon à la taille du porteur sous la forme

$$y = Q \times T + R \qquad\qquad (7)$$

où :

- y est la distance de Harmon, exprimée en millimètres ;
- T est la taille de l'individu, exprimée en millimètres ;
- Q et R des constantes déterminées par régression linéaire, la constante R étant exprimée en millimètres.

Il a été déterminé que la constante Q est égale à 0,3 et que la constante R est égale à - 104 mm.

Comme décrit précédemment, en considérant que la distance de lecture correspond à la distance de Harmon, il est alors possible de déterminer l'inset de la lentille. En effet, il est connu que l'inset d'une lentille ophtalmique multifocale dépend, entres autres, de la distance de lecture. Ceci provient du fait qu'en fonction de la distance de lecture déterminée, le regard du porteur, en lecture, correspond à une rotation plus ou moins importante des yeux en direction du plan sagittal. Pour des lentilles identiques, plus la distance de lecture du porteur est petite, plus l'inset de la lentille doit être grand.

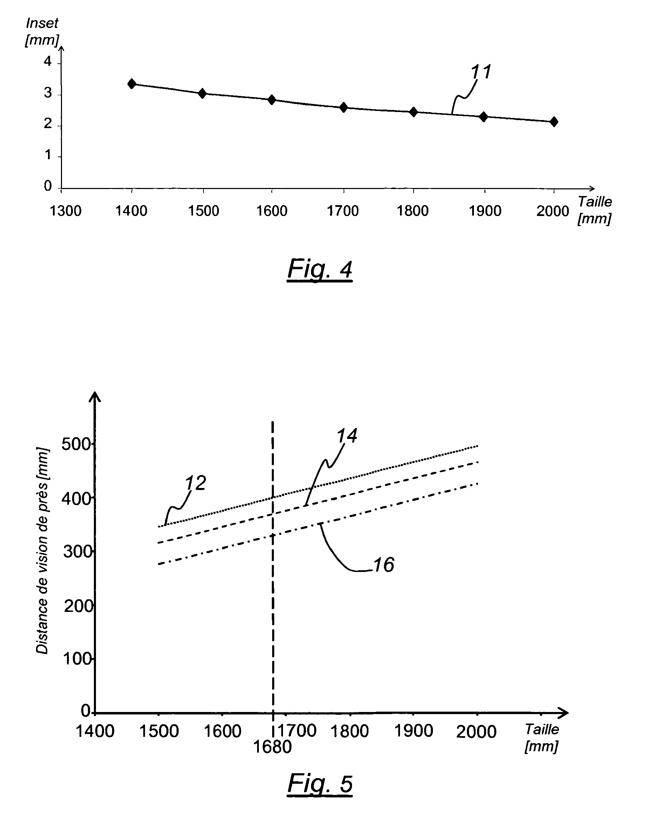

La figure 4 illustre une courbe 11 de définition de l'inset d'une lentille ophtalmique en fonction de la taille du porteur, la prescription plan du porteur comprenant une addition de 2 dioptries. Cette courbe 11 indique qu'une lentille ophtalmique adaptée à un porteur d' 1,40 m présente un inset de 3,4 mm, tandis qu'une lentille ophtalmique adaptée à un porteur de 2,00 m présente un inset de 2,1 mm.

La modification de l'inset de la lentille ophtalmique permet de tenir compte de la distance de lecture de chaque porteur, cette distance de lecture étant reliée à la taille du porteur. Sans cette adaptation de l'inset en fonction de la taille du porteur, c'est-à-dire avec un inset fixé pour toutes les tailles, les lentilles ophtalmiques ne présentent pas un confort optimal pour le porteur. En effet, dans ce cas, la méridienne de progression est mal située par rapport au regard du porteur.

Selon un autre exemple de procédé de définition de lentilles ophtalmiques, il est proposé d'adapter à l'age du porteur la droite de définition de la distance de lecture en fonction de la taille du porteur.

En effet, il a été constaté que les personnes âgées, qui ont une addition plus élevée, travaillent confortablement à une distance qui est inférieure à la distance de Harmon. Au contraire, pour les porteurs plus jeunes, qui ont une addition plus faible, la distance de lecture confortable est égale à la distance de Harmon.

Pour tenir compte de cette différence en fonction de l'âge du porteur, et par conséquent de l'addition prescrite, sur la distance de lecture, il est proposé, selon un exemple de procédé de définition d'une lentille ophtalmique de modifier la valeur de R en fonction de l'addition. Cette valeur de R peut ainsi être constante si l'addition est inférieure à une valeur de seuil. Si l'addition est supérieure ou égale à cette valeur de seuil, la valeur de R peut-être définie par une fonction affine de l'addition.

En particulier il est proposé de déterminer la distance de lecture DL sous une forme :

$$DL = Q \times T + R \qquad\qquad (8)$$

où

$$\begin{cases} Q = \text{constante} \\ R = -104 \qquad\qquad \text{si l'addition est inférieure à 1,75 dioptries,} \\ R = -80 * \text{addition} + 26 \quad \text{si l'addition est supérieure ou égale à 1,75 dioptries.} \end{cases} \qquad (9)$$

La figure 5 représente un triplet de courbes 12, 14, 16 qui correspondent chacune à une valeur d'addition distincte. En l'occurrence les droites 12, 14 et 16 correspondent respectivement à une addition inférieure à 1,75, en l'espèce 1,50, et à une addition de 2,00 et 2,50 dioptries. Ces droites ont donc comme équation respective :

- pour la droite 12 :

$$DL = 0,30 \times T - 104 \qquad\qquad (10a)$$

- pour la droite 14 :

$$DL = 0,30 \times T - 134 \qquad\qquad (10b)$$

- pour la droite 16 :

$$DL = 0{,}30 \times T - 174 \qquad (10c)$$

où la distance de lecture DL et la taille T sont exprimées en millimètres.

On obtient ainsi, pour une même taille, par exemple 1680 mm, trois valeurs distinctes de la distance de vision de près :

- si l'addition est inférieure à 1,75 dioptries, alors la distance de vision de près est égale à 400 mm ;
- si l'addition est égale à 2,00 dioptries, alors la distance de vision de près est égale à 370 mm ; et
- si l'addition est égale à 2,50 dioptries, alors la distance de vision de près est égale à 330 mm.

Selon un quatrième exemple de procédé de définition d'une lentille ophtalmique, on détermine un inset nominal, noté InSetn, calculé pour une taille moyenne de 1680 mm. La valeur de l'inset en fonction de la taille peut alors être estimée par une équation de la forme :

$$Inset = (1 + k) \times Insetn \qquad (11)$$

où k est une variable qui est fonction de la taille.

La variable k peut par exemple prendre la forme suivante :

$$k = 56 \times T^2 - 265{,}5 \times T + 288 \qquad (12)$$

où la taille T est exprimée en mètres.

Selon un autre exemple de procédé de définition d'une lentille ophtalmique, il est proposé de moduler également la puissance en vision de près en fonction de la taille du porteur. Plus précisément, plus le porteur est grand, plus la puissance en vision de près est faible.

En effet, classiquement, l'opticien, l'ophtalmologiste ou l'optométriste réalise une prescription en fournissant des paramètres de prescription. Ces paramètres de prescription comprennent notamment la sphère, le cylindre, l'axe et l'addition prescrite. Il est proposé qu'en outre, la distance de mesure de l'addition DM et la taille du porteur soient indiquées.

Dans ce cas, dans une première étape, on détermine la distance de lecture DL en fonction de la taille du porteur, par exemple à l'aide de la formule (8). Ainsi, l'addition peut également être prise en compte, de manière analogue à l'exemple décrit en regard de la figure 5.

Dans une deuxième étape, on détermine si la distance de mesure de l'addition DM est différente de la distance de lecture DL déduite de la première étape.

Dans ce dernier cas, on ajuste l'addition de la lentille ophtalmique Add_lentille :

$$Accomodation\_subjective = \frac{1}{DM} - Add\_prescrite \qquad (14)$$

Or:

$$Add\_lentille = \frac{1}{DL} - Accomodation\_subjective \qquad (15)$$

d'où :

$$Add\_lentille = \frac{1}{DL} - \frac{1}{DM} + Add\_prescrite \qquad (16)$$

Cet ajustement de l'addition de la lentille par rapport à l'addition prescrite permet de corriger le fait que la détermination de l'addition prescrite a été réalisée à une distance de lecture différente de la distance de lecture réelle du porteur telle que déterminée à la deuxième étape.

Sans cet ajustement de l'addition de la lentille, le porteur serait obligé de modifier sa distance de lecture, pour la rendre égale à la distance pour laquelle l'addition prescrite a été réalisée. Il en résulterait un inconfort pour le porteur de la lentille ophtalmique.

Le tableau V ci-dessous illustre l'adaptation de l'addition du verre en fonction de la taille du porteur.

Tableau V : Exemple d'adaptation de l'addition du verre à la taille du porteur

| Taille [m] | 1,40 | 1,50 | 1,60 | 1,70 | 1,80 | 1,90 | 2,00 |
|---|---|---|---|---|---|---|---|
| Distance de lecture [m] | 0,32 | 0,35 | 0,38 | 0,41 | 0,44 | 0,47 | 0,50 |
| Distance de mesure de l'addition [m] | 0,4 | 0,4 | 0,4 | 0,4 | 0,4 | 0,4 | 0,4 |
| Addition prescrite [dioptries] | 2 | 2 | 2 | 2 | 2 | 2 | 2 |
| Addition de la lentille [dioptries] | 2,7 | 2,4 | 2,2 | 2,0 | 1,8 | 1,6 | 1,5 |

Il est à noter que dans ce tableau, la distance de lecture a été déterminée selon l'équation :

$$DL = 30 \times T - 10,4 \qquad (17)$$

où :

- DL est la distance de lecture en mètres ; et
- T est la taille en mètres.

Comme le montre ce tableau V, plus le porteur est grand, plus la puissance en vision de près est faible pour compenser la différence entre la distance de mesure de la vision de près et la distance de lecture véritable.

Il est à noter que l'exemple ci-dessus se rapporte à une lentille ophtalmique à progression de puissance.

Il est cependant envisageable de mettre en oeuvre cette adaptation de la puissance en fonction de la taille du porteur à une lentille ophtalmique du type unifocale. En particulier, il est utile d'adapter la puissance de lentilles ophtalmiques de lunettes de lecture de la manière évoquée ci-dessus.

Par ailleurs, il est possible de combiner les exemples décrits ci-avant.

Selon un premier exemple, on combine les procédés de définition de lentille ophtalmique de manière à tenir compte de la taille du porteur pour démarrer la progression de la puissance de la lentille ophtalmique et pour déterminer l'inset. Selon ce premier exemple, pour une prescription d'addition de 2,5 dioptries, on détermine que l'inset est égal à 3,10 mm, respectivement 2,17 mm, pour un porteur de taille égal à 1,50 m, respectivement de taille égale à 2,00 m.

Selon un autre exemple de procédé de détermination, la taille a été prise en compte pour adapter le démarrage de la progression de puissance, la valeur de l'addition du verre et l'inset pour une prescription d'addition de 2,5 dioptries déterminée pour une distance de lecture de 40 cm. La valeur de l'addition de la lentille déterminée selon ce deuxième exemple pour un porteur d'1,50 m est de 2.85 dioptries, tandis que la lentille pour le porteur de 2,00 m a une addition de 2 dioptries. Enfin, on détermine que la lentille du porteur d'1,50 m a un inset égal à 3,13 mm, tandis que la lentille du porteur de 2,00 m a un inset de 2,14 mm.

Il est remarquable ici que, du fait que la taille est prise en compte pour déterminer à la fois le démarrage de la progression de puissance, l'inset et l'addition, l'inset ainsi obtenu est différent de l'inset obtenu si on ne tient pas compte de la taille pour déterminer l'addition de lentille ophtalmique.

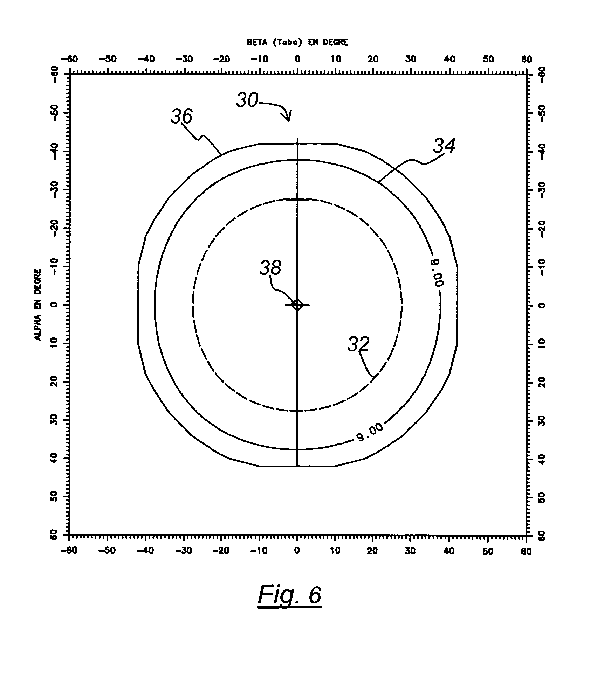

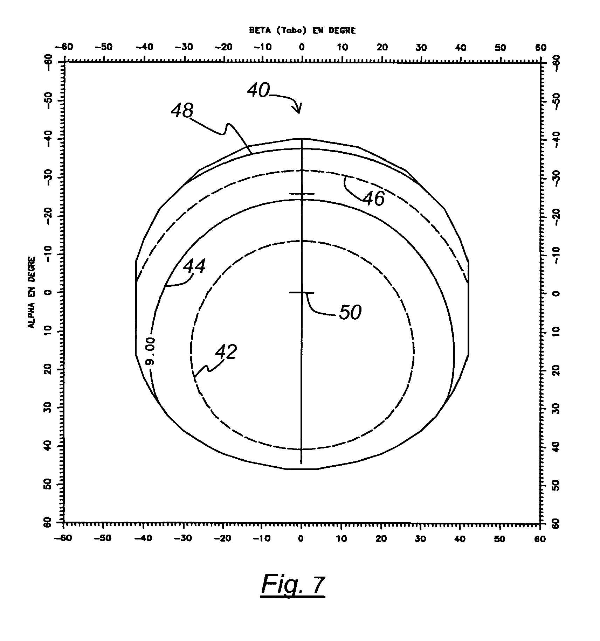

Les figures 6 et 7 illustrent une mise en oeuvre d'un autre exemple de procédé d'adaptation d'une caractéristique d'une lentille ophtalmique en fonction de la taille ou de la hauteur des yeux du porteur de cette lentille ophtalmique.

Les lentilles ophtalmiques 30, 40 dont les analyses optiques en puissance sont représentées sur les figures 6 et 7 sont des lentilles ophtalmiques du type « unifocales ». En l'occurrence, ces lentilles présentent de légères variations de puissance, illustrées sur les figures par les courbes d'iso-puissance 32, 34, 36 et 42, 44, 46, 48 respectivement.

La lentille ophtalmique 30 de la figure 6 est une lentille ophtalmique de type unifocale classique. En effet, la lentille ophtalmique 30 présente des courbes d'iso-puissance 32, 34, 36 sensiblement concentriques, centrées autour du centre optique 38 de la lentille ophtalmique 30. La lentille est montée de telle sorte que le centre optique est aligné avec la pupille du porteur. Les courbes d'iso-puissance 32, 34, 36 successives correspondent à une variation de puissance de 0,25 dioptries.

La lentille ophtalmique 40 de la figure 7, définie selon un procédé de définition de lentilles ophtalmiques en fonction de la taille du porteur, présente également des courbes d'iso-puissance 42, 44, 46, 48 concentriques. Cependant, dans le cas de cette lentille 40, le centre de ces courbes d'iso-puissance est décalé par rapport au centre optique 50 de la lentille. Plus précisément, la lentille 40 étant destinée à un porteur de grande taille, par exemple de 2,00 m, le centre des courbes d'iso-puissance est décalé verticalement vers le bas par rapport au centre optique 50. Ce faisant, la hauteur du centre des aberrations de la lentille ophtalmique, qui correspond au centre des courbes iso-puissance, est positionnée plus bas sur la lentille ophtalmique 40 que sur la lentille ophtalmique 30.

En effet, un porteur de grande taille, par exemple 2,00 m, a tendance à plus regarder vers le bas qu'un porteur de petite taille, par exemple 1,50 m, pour un même comportement oeil-tête des deux porteurs. En déplaçant le centre des courbes d'iso-puissance verticalement vers le bas, on assure que le porteur de grande taille regarde la plus grande partie du temps à travers la zone de correction optimale, définie par la courbe 42 sur la figure 7. Cette zone de correction optimale correspond à l'ensemble des points de la lentille ophtalmique présentant une puissance qui diffère de la puissance prescrite de moins de 0,25 dioptries.

Bien entendu, la présente invention ne se limite pas aux seuls exemples décrits ci-avant.

Tout d'abord, la taille, ou la hauteur des yeux du porteur, est un paramètre qui peut être pris en compte en combinaison avec d'autres paramètres de détermination des lentilles ophtalmiques.

Par ailleurs, seuls des procédés de détermination de lentilles ont été décrits ci-avant. Cependant, ces procédés de détermination peuvent être mis en oeuvre dans le cadre d'un procédé d'optimisation de lentille ophtalmique destinée à un porteur de prescription connue.

Un tel procédé d'optimisation peut être tel que décrit dans le document EP 0 990939 ou le document EP 1 920 291, dans lequel la lentille cible est définie en fonction de la taille du porteur ou de la hauteur des yeux du porteur.

En d'autres termes, un tel procédé d'optimisation de lentille ophtalmique mettant en oeuvre un procédé de définition d'une lentille ophtalmique en fonction de la taille ou de la hauteur des yeux du porteur peut comprendre une première étape de détermination des équations initiales des surfaces avant et arrière de la lentille. L'indice de réfraction de la lentille peut également être déterminé. Ces déterminations peuvent être réalisées par une lecture de données fournies par le fabricant de la lentille ophtalmique ou par mesure.

Ensuite, au moins une surface courante de lentille ophtalmique est choisie. Cette au moins une surface courante peut être choisie identique à la au moins une surface initiale de la lentille correspondante. Cependant, il est connu de l'homme du métier que cette au moins une surface courante peut également être choisie différente à la au moins une surface initiale de la lentille correspondante. Les surfaces courantes correspondent à une face arrière de la lentille ophtalmique, orientée vers le porteur, et/ou à une face avant de la lentille ophtalmique, opposée au porteur.

L'étape suivante du procédé d'optimisation selon cet exemple comprend alors la détermination d'une fonction optique cible de lentille ophtalmique fonction de la prescription du porteur. La fonction optique cible prend généralement la forme d'équations et/ou de répartitions de puissance et d'astigmatisme de la lentille ophtalmique optimisée, en fonction de la direction du regard du porteur. La fonction optique cible peut ainsi, par exemple, associer à chaque direction du regard un couple puissance/astigmatisme ou une équation reliant ces deux paramètres.

Cette fonction optique cible est déterminée par mise en oeuvre d'un procédé de détermination de lentille ophtalmique tel que décrit ci-avant. Ainsi, cette fonction optique cible est déterminée en tenant compte de la taille ou de la hauteur des yeux du porteur. Bien entendu, dans ce procédé d'optimisation, le paramètre « taille du porteur » ou « hauteur des yeux du porteur » peut être combiné à tout autre paramètre d'optimisation connu, en particulier aux conditions de porté des lentilles ophtalmiques. La fonction optique cible peut notamment dépendre de l'indice de réfraction de la lentille.

A partir de la fonction optique, on détermine des cibles optiques. Ces cibles optiques correspondent à un ensemble de données optiques de la fonction optique, déterminées pour certaines directions du regard. Classiquement, les cibles optiques sont un ensemble de valeurs, idéales pour le porteur considéré, de puissance-astigmatisme pour plusieurs directions distinctes du regard. Les cibles optiques peuvent ainsi être obtenues par échantillonnage de la fonction optique cible.

Le procédé d'optimisation se poursuit alors par une étape de détermination d'au moins une surface optimisée par modulation de la surface courante pour atteindre les cibles optiques. Cette étape est itérative. Elle consiste à modifier ponctuellement la ou les surfaces courantes et à déterminer, par simulation, si cette modification ponctuelle permet de se rapprocher ou non des cibles optiques déterminées précédemment. Cette étape est donc généralement mise en oeuvre par ordinateur. La simulation dépend, entre autres, de l'indice de réfraction de la lentille.

Ce procédé d'optimisation peut être mis en oeuvre dans un procédé de fabrication d'une lentille ophtalmique. Le procédé de fabrication d'une lentille ophtalmique comprend alors une première étape de fourniture d'une lentille ophtalmique initiale. Il est possible de fournir comme lentille initiale une lentille semi-finie. Une lentille ophtalmique semi-finie est une lentille dont une surface seulement est à usiner, c'est-à-dire également qu'une seule surface est à *optimiser a priori.*

Le procédé de fabrication comprend une étape de détermination d'au moins une surface optimisée pour la lentille ophtalmique au moyen du procédé d'optimisation, puis une étape d'usinage de la lentille pour réaliser la au moins une surface optimisée. Dans un tel cas, il est fréquent que l'indice de réfraction de la lentille utilisée dans la procédure d'optimisation soit identique à celui de la lentille elle-même.

Comme indiqué ci-avant, il est possible d'optimiser une ou les deux surfaces de lentilles en fonction des cas. De même, le procédé de fabrication peut être mis en oeuvre en usinant une ou les deux surfaces de la lentille ophtalmique initialement fournie.

L'usinage des lentilles pour réaliser la ou les surfaces optimisées peut notamment être réalisé par un procédé dit de « Digital Surfacing ».

En outre, l'invention peut être utilisée pour réaliser un ensemble de lentilles semi-finies, c'est-à-dire destinées à n'être usinées que sur une face, qui sont destinées à des porteurs de tailles ou de hauteurs d'yeux différentes. Un tel ensemble de lentilles semi-finies comprend des lentilles dont au moins une caractéristique est fonction de la taille ou de la hauteur des yeux des porteurs.

Ainsi, un tel ensemble peut par exemple comporter des lots de lentilles ophtalmiques semi-finies. Chaque lot comprend des lentilles avec des bases et des additions différentes. Une base est la valeur de la sphère en un point de référence, généralement le point de contrôle de la vision de loin. La face avant, c'est-à-dire celle qui est destinée à être opposée au porteur, peut être définie pour une plage de taille, c'est-à-dire que le démarrage de sa progression, son addition et/ou son inset notamment sont déterminés en fonction de la taille du porteur ou de la hauteur des yeux du porteur.

On peut par exemple imaginer trois lots de lentilles semi-finies pour les porteurs de petite taille, de taille moyenne ou de grande taille. Pour une prescription donnée, on peut choisir la lentille semi-finie en fonction de la taille du porteur. On calcule alors la face arrière pour répondre à la prescription du porteur.

## Revendications

1. Procédé de détermination d'une lentille ophtalmique multifocale pour un porteur comprenant les étapes de :

    i) détermination de la taille ($T_1$, $T_2$, $T_3$) ou de la hauteur des yeux ($H_1$, $H_2$, $H_3$) du porteur ($i_1$, $i_2$, $i_3$) ;
    ii) calcul d'au moins une caractéristique de la lentille ophtalmique multifocale en fonction de la taille ($T_1$, $T_2$, $T_3$) ou de la hauteur des yeux ($H_1$, $H_2$, $H_3$) du porteur ($i_1$, $i_2$, $i_3$) ;

    où la lentille ophtalmique multifocale a une addition de puissance et une croix de montage, et dans lequel l'angle d'abaissement des yeux du porteur ($i_1$, $i_2$, $i_3$), entre la direction de vision passant par la croix de montage et celle correspondant au début de la progression, c'est à dire passant par un point présentant une puissance optique correspondant à un seuil prédéterminé compris entre 5 et 25% de l'addition de la lentille ophtalmique multifocale, est une fonction croissante de la taille ($T_1$, $T_2$, $T_3$) ou de la hauteur des yeux du porteur ($H_1$, $H_2$, $H_3$).

2. Procédé selon la revendication 1, dans lequel l'étape ii) comprend les étapes de :

    a) détermination d'une distance de lecture du porteur ($i_1$, $i_2$, $i_3$) en fonction de la taille ($T_1$, $T_2$, $T_3$) ou de la hauteur des yeux ($H_1$, $H_2$, $H_3$) du porteur ($i_1$, $i_2$, $i_3$), et
    b) calcul d'au moins une caractéristique de la lentille ophtalmique multifocale en fonction de la distance de lecture.

3. Procédé selon l'une quelconque des revendications précédentes, dans lequel on détermine le décalage latéral en direction nasale d'un point de contrôle d'une zone de vision de près par rapport à un point de contrôle d'une zone de vision de loin selon une fonction décroissante de la taille ($T_1$, $T_2$, $T_3$) ou de la hauteur des yeux ($H_1$, $H_2$, $H_3$) du porteur ($i_1$, $i_2$, $i_3$).

4. Procédé selon la revendication 3, dans lequel on détermine le décalage latéral en direction nasale du point de contrôle de la zone de vision de près par rapport au point de contrôle de la zone de vision de loin selon une fonction croissante de l'addition de la lentille ophtalmique multifocale.

5. Procédé selon l'une quelconque des revendications précédentes, dans lequel on détermine l'addition de la lentille ophtalmique multifocale selon une fonction décroissante de la taille ($T_1$, $T_2$, $T_3$) ou de la hauteur des yeux ($H_1$, $H_2$, $H_3$) du porteur ($i_1$, $i_2$, $i_3$).

6. Procédé selon la revendication 5, dans lequel on détermine également l'addition de la lentille ophtalmique multifocale selon une fonction croissante de l'âge du porteur.

**7.** Procédé d'optimisation d'une lentille ophtalmique multifocale destinée à un porteur de prescription connue comprenant les étapes de :

- choix d'au moins une surface courante de la lentille ophtalmique multifocale ;
- détermination d'une fonction optique cible de lentille ophtalmique fonction de la prescription du porteur, par mise en oeuvre d'un procédé de détermination selon l'une quelconque des revendications 1 à 6 ;
- détermination de cibles optiques à partir de la fonction optique cible ; et
- détermination d'au moins une surface optimisée par modulation de la au moins une surface courante pour atteindre les cibles optiques.

**8.** Procédé de fabrication d'une lentille ophtalmique multifocale comprenant les étapes de :

- fourniture d'une lentille ophtalmique initiale ;
- détermination d'au moins une surface optimisée pour la lentille ophtalmique multifocale au moyen du procédé d'optimisation de la revendication 7 ; et
- usinage de la lentille pour réaliser la au moins une surface optimisée.


**Patentansprüche**

**1.** Verfahren zum Bestimmen einer multifokalen ophthalmischen Linse für einen Träger, umfassend folgende Schritte:

i) Bestimmen der Größe ($T_1$, $T_2$, $T_3$) oder der Höhe ($H_1$, $H_2$, $H_3$) der Augen des Trägers ($i_1$, $i_2$, $i_3$) ;
ii) Berechnen mindestens einer Charakteristik der multifokalen ophthalmischen Linse in Abhängigkeit von der Größe ($T_1$, $T_2$, $T_3$) oder der Höhe ($H_1$, $H_2$, $H_3$) der Augen des Trägers ($i_1$, $i_2$, $i_3$);

wobei die multifokale ophthalmische Linse einen Brechzusatz und ein Montagekreuz aufweist, und wobei der Absenkwinkel der Augen des Trägers ($i_1$, $i_2$, $i_3$) zwischen der Blickrichtung, die durch das Montagekreuz geht, und derjenigen, die dem Anfang der Progression entspricht, d.h. die durch einen Punkt geht, der eine Brechkraft aufweist, die einer vorbestimmten Schwelle zwischen 5 und 25 % des Zusatzes der multifokalen ophthalmischen Linse entspricht, eine steigende Funktion der Größe ($T_1$, $T_2$, $T_3$) oder der Höhe ($H_1$, $H_2$, $H_3$) der Augen des Trägers ist.

**2.** Verfahren nach Anspruch 1, wobei Schritt ii) folgende Schritte umfasst:

a) Bestimmen eines Leseabstands des Trägers ($i_1$, $i_2$, $i_3$) in Abhängigkeit von der Größe ($T_1$, $T_2$, $T_3$) oder der Höhe ($H_1$, $H_2$, $H_3$) der Augen des Trägers ($i_1$, $i_2$, $i_3$) und
b) Berechnen mindestens einer Charakteristik der multifokalen ophthalmischen Linse in Abhängigkeit von dem Leseabstand.

**3.** Verfahren nach einem der vorhergehenden Ansprüche, wobei der seitliche Versatz in Nasenrichtung eines Kontrollpunktes einer Nahsichtzone im Verhältnis zu einem Kontrollpunkt einer Fernsichtzone gemäß einer absteigenden Funktion der Größe ($T_1$, $T_2$, $T_3$) oder der Höhe ($H_1$, $H_2$, $H_3$) der Augen des Trägers ($i_1$, $i_2$, $i_3$) bestimmt wird.

**4.** Verfahren nach Anspruch 3, wobei der seitliche Versatz in Nasenrichtung des Kontrollpunktes der Nahsichtzone im Verhältnis zum Kontrollpunkt der Fernsichtzone gemäß einer steigenden Funktion des Zusatzes der multifokalen ophthalmischen Linse bestimmt wird.

**5.** Verfahren nach einem der vorhergehenden Ansprüche, wobei der Zusatz der multifokalen ophthalmischen Linse gemäß einer absteigenden Funktion der Größe ($T_1$, $T_2$, $T_3$) oder der Höhe ($H_1$, $H_2$, $H_3$) der Augen des Trägers ($i_1$, $i_2$, $i_3$) bestimmt wird.

**6.** Verfahren nach Anspruch 5, wobei der Zusatz der multifokalen ophthalmischen Linse auch gemäß einer steigenden Funktion des Alters des Trägers bestimmt wird.

**7.** Verfahren zum Optimieren einer multifokalen ophthalmischen Linse für einen Träger mit bekannter Verschreibung, umfassend folgende Schritte:

- Auswählen mindestens einer normalen Oberfläche der multifokalen ophthalmischen Linse;

- Bestimmen einer angestrebten optischen Funktion der ophthalmischen Linse in Abhängigkeit von der Verschreibung des T r ä g e r s d u r c h U m s e tz e n eines Bestimmungsverfahrens nach einem der Ansprüche 1 bis 6;
- Bestimmen optischer Ziele aus der angestrebten optischen Funktion; und
- Bestimmen mindestens einer Oberfläche, die durch Modulation der mindestens einen normalen Oberfläche optimiert wird, um die optischen Ziele zu erreichen.

8. Verfahren zum Herstellen einer multifokalen ophthalmischen Linse, umfassend folgende Schritte:

- Bereitstellen einer anfänglichen ophthalmischen Linse;
- Bestimmen mindestens einer optimierten Oberfläche für die multifokale ophthalmische Linse mittels des Optimierungsverfahrens nach Anspruch 7; und
- Bearbeiten der Linse zum Ausbilden der mindestens einen optimierten Oberfläche.

**Claims**

1. Method for designing a multifocal ophthalmic lens for a wearer, comprising steps of:

i) determining the size ($T_1$, $T_2$, $T_3$) or the height of the eyes ($H_1$, $H_2$, $H_3$) of the wearer ($i_1$, $i_2$, $i_3$) ; and
ii) calculating at least one characteristic of the multifocal ophthalmic lens depending on the size ($T_1$, $T_2$, $T_3$) or the height of the eyes ($H_1$, $H_2$, $H_3$) of the wearer ($i_1$, $i_2$, $i_3$);

wherein the multifocal ophthalmic lens has an add power and a fitting cross, and in which the angle through which the eyes of the wearer ($i_1$, $i_2$, $i_3$) drop between the gaze direction passing through the fitting cross and that corresponding to the start of the corridor, i.e. that passing through a point having an optical power corresponding to a preset threshold comprised between 5 and 25% of the add of the multifocal ophthalmic lens, is an increasing function of the size ($T_1$, $T_2$, $T_3$) or the height of the eyes of the wearer ($H_1$, $H_2$, $H_3$).

2. Method according to Claim 1, in which step ii) comprises steps of:

a) defining a reading distance of the wearer ($i_1$, $i_2$, $i_3$) depending on the size ($T_1$, $T_2$, $T_3$) or the height of the eyes ($H_1$, $H_2$, $H_3$) of the wearer ($i_1$, $i_2$, $i_3$); and
b) calculating at least one characteristic of the multifocal ophthalmic lens depending on the reading distance.

3. Method according to either one of the preceding claims, in which the lateral offset in the nasal direction of a reference point of a near vision zone relative to a reference point of a distance vision zone is defined as a decreasing function of the size ($T_1$, $T_2$, $T_3$) or the height of the eyes ($H_1$, $H_2$, $H_3$) of the wearer ($i_1$, $i_2$, $i_3$).

4. Method according to Claim 3, in which the lateral offset in the nasal direction of the reference point of the near vision zone relative to the reference point of the distance vision zone is defined as an increasing function of the add of the multifocal ophthalmic lens.

5. Method according to any one of the preceding claims, in which the add of the multifocal ophthalmic lens is defined as a decreasing function of the size ($T_1$, $T_2$, $T_3$) or the height of the eyes ($H_1$, $H_2$, $H_3$) of the wearer ($i_1$, $i_2$, $i_3$).

6. Method according to Claim 5, in which the add of the multifocal ophthalmic lens is also defined as an increasing function of the age of the wearer.

7. Method for optimizing a multifocal ophthalmic lens intended for a wearer with a known prescription, comprising steps of:

- choosing at least one current surface of the multifocal ophthalmic lens;
- defining a target optical function for the ophthalmic lens, depending on the prescription of the wearer, by implementing a design method according to any one of Claims 1 to 6;
- defining optical targets on the basis of the target optical function; and
- defining at least one optimized surface by modulating the at least one current surface in order to achieve the optical targets.

**8.** Process for manufacturing a multifocal ophthalmic lens, comprising steps of:

- providing an initial ophthalmic lens;
- defining at least one optimized surface for the multifocal ophthalmic lens by means of the optimization method of Claim 7; and
- machining the lens in order to produce the at least one optimized surface.

_Fig. 1_

EP 2 470 941 B1

_Fig. 2_

_Fig. 3_

_Fig. 4_

_Fig. 5_

_Fig. 6_

_Fig. 7_

## RÉFÉRENCES CITÉES DANS LA DESCRIPTION

**Documents brevets cités dans la description**

- FR 2699294 A
- US 5270745 A
- US 5272495 A
- FR 2683642 A
- FR 2704327 A
- WO 9812590 A
- FR 2009000458 W
- US 20080094571 A
- EP 1747750 A
- EP 0990939 A
- EP 1920291 A